# EUROPÄISCHE PATENTSCHRIFT

(11) **EP 3 857 213 B1**
(45) Veröffentlichungstag und Bekanntmachung des Hinweises auf die Patenterteilung: **03.09.2025**
(21) Anmeldenummer: 19828197.4
(22) Anmeldetag: 07.11.2019
(51) Int. Cl.: G01N 27/02, G01M 5/00, G01N 27/20, F16L 11/127, F15B 19/00

(54) **MESSVERFAHREN ZUR BESTIMMUNG EINES STRUKTUR- UND VERSCHLEISSZUSTANDES EINES BAUTEILES**
MEASURING METHOD FOR DETERMINING A STRUCTURAL AND WEAR STATE OF A COMPONENT
PROCEDE DE MESURE POUR DETERMINER UN ETAT DE STRUCTURE ET D'USURE D'UN COMPOSANT

(30) Priorität: 07.11.2018 DE 102018008724
(43) Veröffentlichungstag der Anmeldung: 04.08.2021
(73) Patentinhaber: Klaus Faber AG, 66113 Saarbrücken (DE)
(72) Erfinder: WITTMANN, Armin, 54298 Welschbillig (DE); EHLENZ, Tobias, 54612 Lasel (DE)
(74) Vertreter: Patentanwälte Bernhardt / Wolff Partnerschaft mbB
(86) Internationale Anmeldenummer: PCT/DE2019/000293
(87) Internationale Veröffentlichungsnummer: WO 2020/094168

(56) Entgegenhaltungen:
- WO-A1-2018/143616
- WO-A1-2018/143616
- DE-A1- 102006 056 235
- DE-A1- 102006 056 235
- JP-A- 2000 002 503
- JP-A- 2000 002 503
- JP-A- H07 286 982
- US-A- 3 272 003
- US-A1- 2016 146 697
- US-A1- 2016 146 697
- US-A1- 2019 360 752
- US-A1- 2019 360 752
- SHISHUANG SUN ET AL: "A Novel TDR-Based Coaxial Cable Sensor for Crack/Strain Sensing in Reinforced Concrete Structures", IEEE TRANSACTIONS ON INSTRUMENTATION AND MEASUREMENT, IEEE SERVICE CENTER, PISCATAWAY, NJ, US, vol. 58, no. 8, 17 July 2009 (2009-07-17), pages 2714 - 2725, XP011263804, ISSN: 0018-9456
- SHISHUANG SUN ET AL: "A Novel TDR-Based Coaxial Cable Sensor for Crack/Strain Sensing in Reinforced Concrete Structures", IEEE TRANSACTIONS ON INSTRUMENTATION AND MEASUREMENT, IEEE SERVICE CENTER, PISCATAWAY, NJ, US, vol. 58, no. 8, 17 July 2009 (2009-07-17), pages 2714 - 2725, XP011263804, ISSN: 0018-9456

## Beschreibung

Die Erfindung betrifft ein Messverfahren zur Bestimmung eines Struktur- und Verschleißzustandes von Bauteilen, wie in Anspruch 1 angegeben.

Der wachsende Kostendruck im globalen Wettbewerb zwingt Unternehmen dazu, Maßnahmen zur Effizienzsteigerung energisch umzusetzen. Ein störungsfreier Betrieb ist sicherzustellen. Ungeplante Maschinenzustände sind zu vermeiden. Die Lebensdauer von Anlagen, Bauteilen und Bauten ist optimal auszunutzen. Damit diese Ziele umgesetzt werden können, ist eine kontinuierliche und zuverlässige Überwachung von Komponenten und/oder Bauteilen von besonderer Bedeutung. Fehler und Verschleißerscheinungen sollen rechtzeitig diagnostiziert, Instandhaltungsmaßnahmen zeitoptimiert eingeplant und unerwartete Betriebsstillstände und/oder Anlagenschäden vermieden werden.

Abhängig vom verwendeten Material, dem Einsatzzweck und den daraus resultierenden Belastungszuständen treten verschiedenste Verschleißerscheinungen und Versagensszenarien bei Bauteilen oder Gebäudeteilen (z.B. Stahlträger, Armierungen in Beton) auf. Vielfältig sind die Vorgehensweisen zur diesbezüglichen Materialüberwachung.

WO 2018/143616 A1 beschreibt ein Überwachungsverfahren bei dem ein Industrieofen mit einem innerhalb des Ofens angebrachten Feuerfestmaterial und einem darin integrierten Kabelmodul versehen ist, dessen Eigenschaften überwacht werden.

US 2016/0146697 A1 beschreibt ebenfalls ein Überwachungsverfahren, bei dem ein Bau mit integrierten elektrischen Leitern überwacht.

DE 10 2006 056 235 A1 beschreibt ein Verfahren zur Überwachung eines Kabelschutzschlauch eines Roboters.

JP 2000-002503 A beschreibt ein weiteres Verfahren zur Überwachung von Bauten. mit einem integrierten Strukturelement mit elektrischen Kabeln überwacht wird.

Aus JP H07 286982 A geht ein Verfahren zur Überwachung eines keramischen Bauteils hervor, bei dem ein Leiter an dem Bauteil angeordnet wird. Zur Überwachung wird der Skin-Effekt berücksichtigt, der sich ändern soll, wenn sich in dem Bauteil Materialveränderungen wie Risse ausbilden.

US 3,272,003 beschreibt eine Materialermüdungsanzeige, die aus ein Widerstandselement umfasst, das so hergestellt ist, dass es Eigenschaften aufweist, die speziell mit der Ermüdungslebensdauer eine Grundstruktur korrelieren, deren Ermüdungslebensdauer angegeben werden soll. Dazu wird ein Gitter aus leitfähigem Material in Form einer Folie, eines Films oder eines Drahtes, das auf einer zu prüfenden Grundstruktur angebracht, wobei die Änderung des Widerstands oder des Temperaturkoeffizienten des Widerstands des Gittermaterials zur Bestimmung der Ermüdungslebensdauer der Struktur verwendet wird.

Vergleichsweise sicher zu überwachen sind Verschleißerscheinungen, die einfach messbar sind und vorhersehbaren Abläufen folgen, wie beispielsweise die Zunahme von mechanischem Spiel oder der Materialabrieb eines Werkzeuges. Beispielhaft sei hier die DE 10 2008 045 470 A1 genannt, die ein Verfahren zur Bestimmung des Verschleißzustandes von Meißelhaltern und Meißeln von Fräswalzen offenbart.

Schwerer zu erfassen sind dagegen versteckte Strukturschäden und Verschleißerscheinungen in Form von Materialermüdungen z.B. bei dynamischen Belastungen. Die DE 10 2004 023 824 B4 offenbart hierzu eine zerstörungsfreie akustische Prüfmethode zur Untersuchung von weitgehend homogen aufgebauten Serienbauteilen wie beispielsweise Eisenbahnrädern auf Verschleiß und Strukturschäden.

Eine weitere verbreitete Vorgehensweise zur Überwachung von dynamisch mechanisch belasteten Bauteilen ist die Verwendung von Kraft-Moment-Sensoren (Dehnmessstreifen). Kraft-Moment-Sensoren sind elektronische Bauteile, die punktuell Dehnungen und Stauchungen von Bauteilen erfassen können. Die Überwachung größerer Bauteile oder Strukturen kann durch eine Kopplung mehrerer Kraft-Moment-Sensoren zu einem Verbund realisiert werden. Die DE 10 2017 213 667 A1 offenbart einen solchen Verbund mit einem Überwachungssystem um den Ausfall oder die Fehlfunktion einzelner Sensoren im Verbund feststellen zu können.

Besonders in Bezug auf die Erfassung von versteckten Strukturschäden und Materialermüdungen verursachen bestimmte Bauteile und Strukturen einen besonders hohen Aufwand. Hierzu zählen sehr große Bauteile und Strukturen, wie beispielsweise Rohrleitungsinstallationen, die eine ganze Anzahl von Messstellen erfordern.

Bauteile wie beispielsweise verschiedene flexible lastaufnehmende Feder- und Dämpfungselemente können bisher nur eingeschränkt mit zerstörungsfreien Prüfmethoden auf Materialermüdung und Strukturschäden untersucht werden.

Bauteile wie beispielsweise Hydraulik- oder Pneumatik-Medienschläuche, können aufgrund ihrer Eigenflexibilität nicht mit Kraft-Moment-Sensoren in Bezug auf ihre dynamische Belastung überwacht werden.

Für alle genannten Bauteile gilt bisher, dass Bauteilüberwachungen in situ im laufenden Betrieb aufwendiger zu realisieren sind als turnusmäßige Überprüfungen in dafür vorgesehenen Werkstätten oder Laboren.

Wünschenswert ist ein System, mit welchem sich insbesondere große Strukturen und Bauteile mit hoher Eigenflexibiliät wirtschaftlich sinnvoll, sicher und zerstörungsfrei in situ im laufenden Betrieb überwachen lassen.

Ausgehend von den aufgezeigten Prüf- und Überwachungsverfahren hat die vorliegende Erfindung die Aufgabe, ein Messverfahren vorzuschlagen, welches eine wirtschaftlich sinnvolle, zerstörungsfreie und sichere Bestimmung des Struktur- bzw. Materialzustands von dynamisch mechanisch belasteten Bauteilen mit hoher Eigenflexibilität ermöglicht.

Diese Aufgabe ist erfindungsgemäß gelöst durch ein Verfahren mit den kennzeichnenden Merkmalen des Anspruches 1, welches nämlich isolierte Elektrokabel, als Indikatoren einsetzt, um Strukturschäden und Verschleißerscheinungen von Bauteilen aufgrund dynamischer mechanischer Belastung zu erfassen.

Vorteilhafte Ausführungsformen sind Gegenstand von jeweiligen Unteransprüchen.

Das erfindungsgemäße Verfahren nutzt Indikatoren, deren Materialeigenschaften im Oberflächenbereich oder an der Oberfläche, insbesondere deren Oberflächenrauheit unter dynamischer mechanischer Belastung zunimmt. Elektrisch leitende Komponenten von Elektrokabeln, umfassend auch viele Datenübertragungskabel, zeigten sich in Versuchen als geeignet, diesen Effekt zur gewünschten Messung auszuwerten. Elektrokabel, in einer erfindungsgemäßen Weise als eine Art Indikator mit einem Bauteil verbunden, bewegen sich zumindest weitgehend synchron mit dem Bauteil mit. Je stärker die Bewegung ausfällt oder je länger die Bewegungen einwirken, umso höher wird die Oberflächenrauheit des elektrischen Leiters des Elektrokabels in Korrelation mit dem zu überwachenden Bauteil. Die zunehmende Oberflächenrauheit des elektrischen Leiters bildet den fortschreitenden Verschleiß des Bauteils ab.

Die Oberflächenrauheit des elektrischen Leiters wird unter Anwendung des sogenannten Skineffektes messtechnisch erfasst. Dabei wird ein elektrisches Signal in Form eines höherfrequenten Wechselstroms in den elektrischen Leiter eines Elektrokabels eingeleitet. Der Stromfluss konzentriert sich auf die Oberflächen des elektrischen Leiters. Die jeweilige Oberflächenrauheit des durchflossenen Leiters verändert hierbei insbesondere den Widerstandswert des elektrischen Leiters zumindest im oberflächennahen Umfangsbereich. Anhand des Ausgangssignals wird die aktuelle Rauhtiefe der Oberfläche des elektrischen Leiters bestimmt.

In einer besonders bevorzugten Ausführungsform des erfindungsgemäßen Verfahrens wird ein Wechselstrom mit einer Frequenz von 800 - 1000 MHz verwendet, der in einem Bereich von ca. 2 µm Dicke entlang des Umfanges eines elektrischen Leiters fließt. Mit einem solchen Wechselstrom wurden Oberflächenrauheiten eines elektrischen Leiters bis ca. 2 µm reproduzierbar erfasst. Eine Oberflächenrauheit von ca. 2 µm eines elektrischen Leiters bedeutet, dass der betreffende elektrische Leiter ca. 80 % seiner Lebensdauer absolviert hat und damit austauschreif ist. Die typische Zunahme der Oberflächenrauheit entsteht an jedem Punkt einer dynamischen mechanischen Belastung eines elektrischen Leiters.

Dies gilt beispielhaft für Kupfer. Bei anderen, dem Erfindungsgedanke folgend, denkbaren Sensormaterialien (z. B. um eine andere Empfindlichkeit des Sensors einzustellen) wird der gleiche Effekt (Rauigkeit) stärker oder geringer ausfallen und wird - über den Erfindungsgedanken hinausgehend - nach besonders bevorzugten Ausführungsformen mit einer individuellen Indikatorfrequenz detektiert.

Ein Elektrokabel fungiert in einer weiteren bevorzugten Ausführungsform auf seiner gesamten Länge als Sensor. Hieraus ergibt sich ein besonderer Vorteil eines erfindungsgemäßen Verfahrens, Verschleiß oder Strukturschäden eines Bauteils sensorisch nicht nur punktuell, sondern über eine ganze Strecke zu erfassen. Der Verlauf der Strecke wird dabei nahezu beliebig durch eine entsprechende Verlegung des elektrischen Leiters bestimmt. Die Länge des oder der als Sensorkabel fungierenden elektrischen Leiter kann dabei erfindungsgemäß von wenigen Millimetern Länge bis hin zu mehreren Hundert Metern Länge variieren, um eine jeweils passende Überwachungsantwort zu diversen Überwachungsaufgaben zu liefern. Beispielsweise über die Erfindung nutzende Zeit-Weg-Auswertungen der Messwerte sind die Positionen lokaler Schädigungen des oder der Sensorkabel ermittelbar.

Aufwendige Verbundschaltungen von Sensoren zur Erfassung einer Strecke oder einer Fläche sind nicht notwendig. Das erfindungsgemäße Verfahren eignet sich damit für eine ganze Anzahl verschiedenartiger Bauteile und Strukturen. Es ist beispielsweise möglich, Schlauchleitungen für Hydraulik oder Pneumatik an hochbeweglichen Industrierobotern zu überwachen. Gleichzeitig sind erfindungsgemäße Verfahren auch geeignet, beispielsweise Masten oder Antennen, die dynamischen Belastungen mit nicht exakt quantifizierbaren Lastspitzen durch Winddruck ausgesetzt sind, oder tragende Bauteile wie beispielsweise Stahlträger, zu überwachen.

Der geringe Bauraumbedarf und die vergleichsweise niedrigen Kosten für das oder die Sensorkabel erlauben den Aufbau redundanter Systeme durch das parallele Verlegen zweier oder mehrerer elektrischer Leiter.

Die als Verschleißsensor fungierenden Elektrokabel können dabei sowohl an der Oberfläche von zu überwachenden Bauteilen als auch im Bauteilinneren angebracht werden. Mit dem erfindungsgemäßen Verfahren können Sensorkabel bereits bei der Herstellung in das Bauteil integriert werden und ermöglichen damit eine zerstörungsfreie Überwachung der inneren Bauteilstruktur über die gesamte Lebenszeit des Bauteils.

Die Verbindung eines erfindungsgemäßen Sensorkabels mit einem Bauteil ist so zu gestalten, dass Bauteilbewegungen sich auf das Sensorkabel übertragen. Beispielsweise kann die Verbindung durch Verkleben, mittels Klemmung oder durch andere bekannte Befestigungslösungen vorgenommen werden.

Das erfindungsgemäße Verfahren kann in allen Bereichen angewendet werden, in denen Elektrokabel einsetzbar sind. Das schließt insbesondere auch Arbeitsumgebungen ein, die eine Verwendung von sensibler Sensorik nur eingeschränkt zulassen, wie bspw. im Wirkbereich aggressiver Stoffe, hoher oder niedriger Temperaturen, verstärkter Staubentwicklung oder starker Vibrationen.

Aufgrund des relativ geringen Bauraumbedarfs für das oder die Sensorkabel, ist das erfindungsgemäße Verfahren für Bauteile mit beengten Bauraumverhältnissen geeignet, in vielen Fällen ist auch ein nachträglicher Einbau in bestehende Installationen möglich.

Vorgefertigte Einzelbauteile oder Ersatzteile können bereits mit vorkonfektionierten Sensorleitungen bereitgestellt werden. Zur erfindungsgemäßen Verwendung kommen insbesondere Elektrokabeltypen, die zum Führen einer elektrischen Welle geeignet sind, beispielsweise Koaxialkabel oder Twisted-Pair-Kabel. Der als Indikator verwendete Elektrokabeltyp hat einen maßgeblichen Einfluss auf die Aussagekraft der durchgeführten Überwachungsmessung. Die Verwendung von Elektrokabeltypen, die zum Führen zumindest einer elektrischen Welle geeignet sind, führt zu Messergebnissen, also Ausgangssignalen des oder der Sensorkabel, die direkt mit Referenzsignalen verglichen werden können. Damit wird ein Bauteilüberwachungsmodus möglich, der auch bei turnusmäßigen, lediglich einige Sekunden andauernden Messungen, eine aussagekräftige Verschleißdiagnose zulässt. Die Verwendung von Elektrokabeltypen ohne Eignung zum Führen zumindest einer elektrischen Welle erbringt Messergebnisse, also Ausgangssignale, deren Signalverlauf auszuwerten ist. Hier ist ein permanentes Monitoring für eine Zustandsdiagnose erforderlich.

Das erfindungsgemäße Verfahren erlaubt damit sowohl eine permanente Überwachung von Bauteilen und Strukturen als auch, bei Verwendung geeigneter Sensorkabel, eine turnusmäßige Abfrage des Bauteilzustandes. Eine permanente Überwachung mit ständig an die Sensorleitung(en) angeschlossenen Auswertegerät(en) gibt unmittelbar Auskunft über den Bauteilzustand und auch über Veränderungen im Verschleißverlauf. Beispielsweise deutet ein beschleunigter Anstieg der Oberflächenrauheit und damit der Messwerte auf eine erhöhte Bauteilbewegung hin. Das kann auf ein beginnendes Strukturversagen, beispielsweise durch Delamination oder beginnende Rissbildung, hindeuten.

Die bei der Verwendung von Elektrokabeln mit Eignung zum Führen zumindest einer elektrischen Welle möglichen turnusmäßigen Überprüfungen von Bauteilen offenbaren ebenfalls den Verschleißfortschritt eines Bauteiles oder einer Struktur, da die in der Oberflächenrauheit des elektrischen Leiters des Sensorkabels kumulierte dynamisch mechanische Belastung mit dem erfindungsgemäßen Verfahren messtechnisch auswertbar erfasst werden kann.

Eine Vorrichtung (nicht Gegenstand der vorliegenden Erfindung) zur Durchführung des erfindungsgemäßen Messverfahrens besteht in einer bevorzugten Ausführungsform aus einer Energieversorgung, einem Signalgenerator, einer Signalauswerteeinheit, einem Datenlogger zur Aufzeichnung relevanter Daten, insbesondere des HF-Widerstandes und einer oder mehrerer Schnittstellen zur Kontaktierung des oder der Sensorkabel.

Vorrichtungskomponenten bevorzugter Ausführungsformen werden, zur flexiblen Durchführung von insitu Messungen, in einer transportablen Ausführungsform mit eigener Energieversorgung, beispielsweise über Batterien oder Akkus, bereitgestellt. Für eine parallele Durchführung des erfindungsgemäßen Messverfahrens an mehreren elektrischen Leitern, ist die Messvorrichtung mit einer entsprechenden Anzahl von Eingangs- und Ausgangsschnittstellen für die Messsignale auszustatten.

Vorzugsweise werden Koaxialkabel in der Vorrichtung (nicht Gegenstand der vorliegenden Erfindung) und dem erfindungsgemäßen Verfahren verwendet.

Bei Verwendung eines Elektrokabels mit Eignung zum Führen einer elektrischen Welle als Sensorkabel kann eine turnusmäßige Messung des Widerstandes erfolgen. Die dynamisch-mechanische Belastung kumuliert in den beschriebenen Gefügeveränderungen des elektrischen Leiters, diese wiederum ändert den Widerstandswert des Leiters. Anhand des gemessenen Widerstandswertes lässt sich die Tiefe der Gefügeveränderungen und damit der Verschleißgrad des Leiters errechnen.

Bei Verwendung von Elektrokabeln ohne Eignung zum Führen einer elektrischen Welle, wird zur Diagnose ebenfalls der Widerstandswert gemessen. Hier ist jedoch nicht das Messergebnis an sich, sondern der Verlauf der Signaländerungen aussagekräftig. D.h. hier muss permanent überwacht werden um den Verlauf der Signaländerungen beobachten zu können.

Die Vorrichtung (nicht Gegenstand der vorliegenden Erfindung) umfasst neben dem/den Sensorkabeln zumindest ein Messgerät, beinhaltend vorzugsweise eine Energieversorgung, einen Signalgenerator/Signalquelle, eine Signalauswertung, einen Datenlogger und ggf. physische und elektronische Schnittstellen zum Trennen der Sensorkabel von der übrigen Vorrichtung und/oder zur Anbindung der Vorrichtung an einen Zentralrechner oder eine Maschinensteuerung.

Die Sensorkabel können an der Oberfläche von Bauteilen oder auch im Bauteilinneren verlaufen.

Die Kabellängen der Sensorkabel können von wenigen Millimetern bis hin zu mehreren Hundert Metern betragen. (endgültige Grenzen noch nicht ermittelt)

Die Sensorkabel können entweder in einer Schleife oder, bei Verwendung eines Endwiderstandes, einfach verlegt werden.

Der Widerstandswert eines am Sensorkabelende angebrachten Endwiderstand entspricht dem inneren Widerstand des betreffenden Überwachungskabels.

Eine Überwachungseinrichtung kann in einer stationären Ausführung oder auch transportabel ausgeführt werden.

Eine weitere beispielhafte Überwachungsvorrichtung (nicht Gegenstand der vorliegenden Erfindung) überwacht, eine entsprechende Anzahl von Messein- und -ausgängen vorausgesetzt, mehrere Sensorkabel parallel.

Eine besonders vorteilhafte Verwendung sieht es ganz allgemein vor, dass eine elektrotechnisch am Bauteil gemessene Größe zur indirekten Beschreibung des Bauteilverschleißes dient.

Im Folgenden wird die Erfindung anhand von nachfolgend aufgeführten Zeichnungen ausführlich erläutert. Es zeigen
Figur 1 einen Elektroleiter mit schematischer Darstellung der Oberflächenschädigung,
Figur 2 eine Detailansicht einer Oberflächenschädigung,
Figur 3 einen Leiterquerschnitt mit schematisch eingezeichneter Eindringtiefe δ (Skintiefe),
Figur 4 eine schematische Darstellung eines Beispiel-Bauteils, mit eingetragenen Belastungsvektoren,
Figur 5 eine schematische Darstellung eines Beispiel-Bauteils mit an der Bauteiloberfläche verlegtem Sensorkabel und Endwiderstand,
Figur 6 eine schematische Darstellung eines Beispiel-Bauteils mit an der Bauteiloberfläche als Schleife verlegtem Sensorkabel und
Figur 7 eine schematische Darstellung eines Beispiel-Bauteils mit integrierten Sensorkabeln.

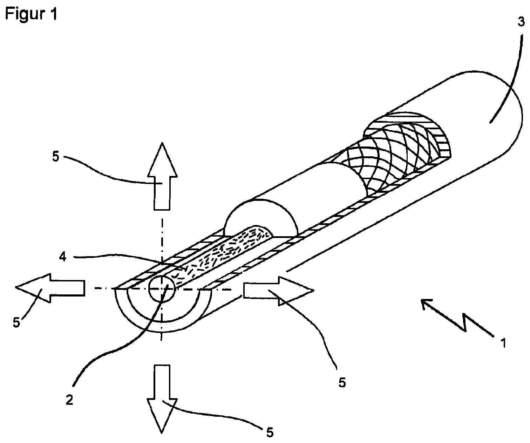

Figur 1 zeigt in einer perspektivischen Ansicht einen Abschnitt eines Elektrokabels 1, in einer besonders als Sensorkabel für das erfindungsgemäße Verfahren bevorzugten Ausführungsform als Koaxialkabel, geeignet zum Führen zumindest einer elektrischen Welle. Erkennbar dargestellt sind ein elektrischer Leiter 2 im Inneren des Kabelaufbaues und eine den Kabelaufbau umgebende Isolierung 3. Der elektrische Leiter 2 besteht dabei aus einem üblicherweise zu diesem Zweck verwendeten metallischen Werkstoff, vorzugsweise aus Kupfer oder Aluminium bzw. geeigneten Legierungen auf Basis dieser Metalle. Schematisch dargestellt sind Oberflächenschädigungen 4 des elektrischen Leiters 2, die bei dynamischer mechanischer Belastung des Elektrokabels 1 auftreten und bei andauernder dynamischer mechanischer Belastung des Elektrokabels zunehmen. Mögliche Bewegungsrichtungen 5 des Elektrokabels 1 als Resultat einer dynamisch mechanischen Belastung sind mittels Pfeilen angedeutet.

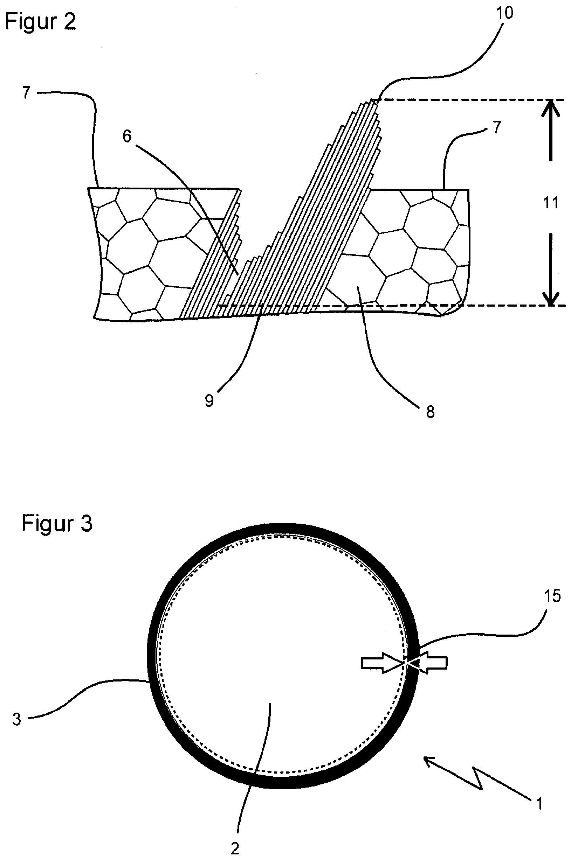

Figur 2 zeigt in einer schematischen Detailansicht als stark vergrößerten Ausbruch die Veränderungen eines Metallgefüges aufgrund von dynamischer mechanischer Belastung. Das Metallgefüge, bestehend aus Körnern 8, bildet, bei dynamischer mechanischer Belastung, beginnend an einer Oberfläche 7 des Elektrokabels 1, partielle Gefügeveränderungen in Form von Gleitzonen 9 aus. Das Material der Gleitzonen 9 verschiebt sich aufgrund der dynamisch mechanischen Belastung zueinander und bildet dabei als Intrusionen 6 bezeichnete Vertiefungen und als Extrusionen 10 bezeichnete Erhebungen relativ zum umgebenden Material des elektrischen Leiters 2 aus. Relevant für eine Verschleißdiagnose gemäß des erfindungsgemäßen Verfahrens ist der mittlere Abstand 11 zwischen den höchsten Punkten der Extrusionen 10 und den tiefsten Punkten der Intrusionen 6 an verschiedenen Stellen über eine gewisse Länge eines zu bewertenden elektrischen Leiters. Beträgt bei einem metallischen elektrischen Leiter 2 dieser mittlere Abstand 2 µm, hat der betreffende elektrische Leiter 2 ca. 80 % Lebensdauer absolviert und ist damit austauschreif. Es ist mithin also bereits ein erheblicher Verschleiß diagnostiziert, sowie eine aus dem erfindungsgemäßen Verfahren ableitbare Aussage.

Figur 3 zeigt in einer schematischen Querschnittansicht ein Elektrokabel 1. Erkennbar dargestellt sind ein elektrischer Leiter und eine umgebende Isolierung 3. Eine den elektrischen Leiter umlaufende gestrichelte Linie deutet die Skintiefe 15 an. Wechselströme konzentrieren sich, abhängig von ihrer Frequenz in einem bestimmten Bereich entlang der Oberfläche eines elektrischen Leiters 2. Der Wert für die Dicke bzw. Tiefe des durchflossenen Bereiches, gemessen von der Oberfläche des elektrischen Leiters radial zur Mitte hin, wird als Skintiefe 2 bezeichnet.

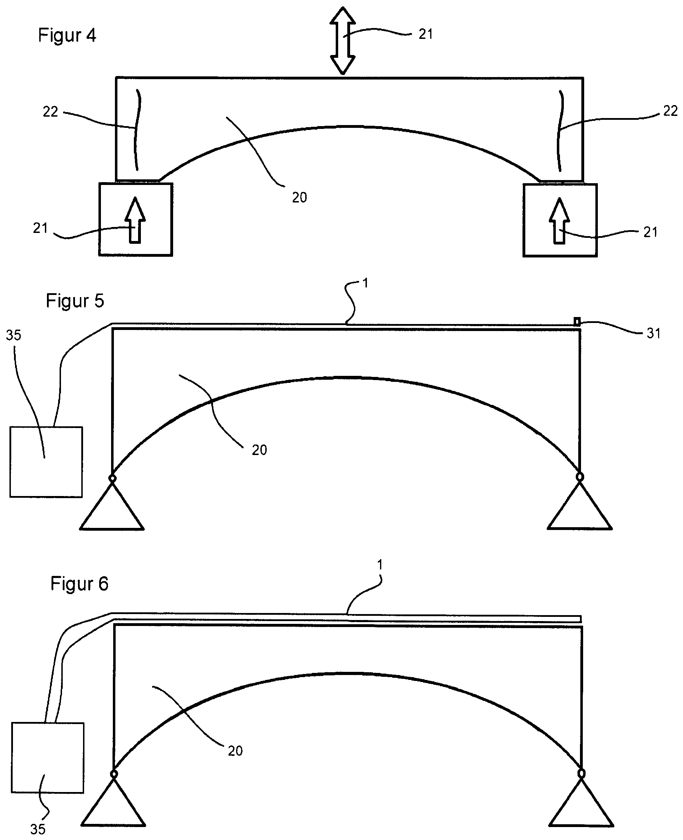

Figur 4 zeigt in einer schematischen Ansicht ein beispielhaftes Bauteil 20. Auf das Bauteil 20 einwirkende dynamisch mechanische Kräfte sind als Vektoren 21 dargestellt. Bereiche des Bauteils 20, die aufgrund der einwirkenden mechanisch dynamischen Kräfte einer elastischen und/oder plastischen Verformung und damit einem Verschleiß unterliegen können sind als Verformungszonen 22 dargestellt.

Figur 5 zeigt schematisch anhand eines beispielhaften Bauteils 20 eine vorteilhafte Ausführungsform einer erfindungsgemäßen Messvorrichtung zur Bauteilüberwachung mit der Anordnung eines Elektrokabels 1 als Sensorkabel an der Außenseite des Bauteils 20. Das Elektrokabel 1 ist dabei, ausgehend von einem links in der Ansicht angeordneten Messgerät 35, entlang des zu überwachenden Bauteils verlegt und auf eine nicht näher dargestellte geeignete Weise mit dem Bauteil 20 verbunden. Das Elektrokabel endet in einem Widerstand 31, wodurch eine Rückführung des Elektrokabels 1 zum Messgerät 35 in einer Schleife vermieden werden kann. Der elektrische Widerstandswert des Widerstandes 31 entspricht dabei in der gezeigten vorteilhaften Ausführungsform dem inneren Widerstand des vorgeschalteten Elektrokabels 1.

Figur 6 zeigt schematisch in einer weiteren vorteilhaften Ausführungsform der beispielhaften Messvorrichtung (nicht Gegenstand der vorliegenden Erfindung) ein beispielhaft dargestelltes Bauteil 20 mit einem als Schleife verlegten Elektrokabel 1.

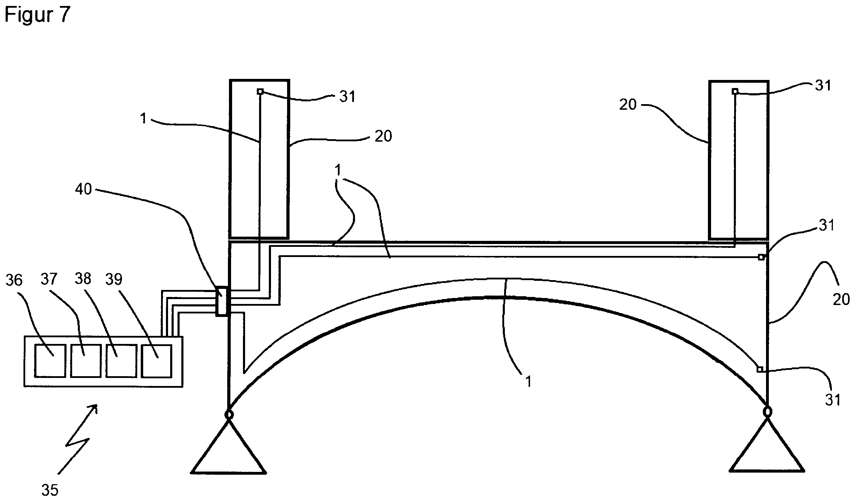

Figur 7 zeigt schematisch anhand eines beispielhaft dargestellten Bauteils eine weitere vorteilhafte Messvorrichtung (nicht Gegenstand der vorliegenden Erfindung).

Schematisch dargestellt sind besonders bevorzugt in einem Messgerät 35 beinhaltete Komponenten, eine Energieversorgung 36, ein Signalgenerator 37, eine Signalauswertung 38 und ein Datenlogger 39. Die Komponenten des Messgerätes 35 sind in der gezeigten Ausführungsform so ausgelegt, dass mehrere Elektrokabel 1 angeschlossen werden können. Erkennbar dargestellt sind vier Elektrokabel 1, die vom Messgerät 35 durch eine Schnittstelle 40 in das Bauteil 20 verlaufen. Die Elektrokabel 1 sind dabei einfach verlegt und enden jeweils in einem Widerstand 31. Die Schnittstelle 40 ist dabei so ausgelegt, dass eine physische und elektronische Trennung der Elektrokabel 1 dort erfolgen kann, beispielsweise um das Messgerät 35 zur turnusmäßigen Bauteilüberwachung mehrerer Bauteile 20 nutzen zu können. Eine Schnittstelle 40 könnte dabei beispielsweise durch einen Stecker oder eine Anschlussklemme realisiert werden. Die Elektrokabel 1 sind in der gezeigten vorteilhaften Ausführungsform der Messvorrichtung im Inneren des Bauteils 20 vorzugsweise in besonders für eine Bauteilüberwachung relevanten Bereichen verlegt.

### Bezugszeichenliste

- 1: Elektrokabel
- 2: elektrischer Leiter
- 3: Isolierung
- 4: Oberflächenschädigung
- 5: Biegerichtung
- 6: Intrusion
- 7: Oberfläche
- 8: Korn
- 9: Gleitzone
- 10: Extrusion
- 11: mittlerer Abstand
- 15: Skintiefe
- 20: Bauteil
- 21: Vektor
- 22: Verformungszone
- 31: Widerstand
- 35: Messgerät
- 36: Energieversorgung
- 37: Signalgenerator
- 38: Signalauswertung
- 39: Datenlogger
- 40: Schnittstelle

## Patentansprüche

1. Überwachungsverfahren in Bezug auf Verschleiß oder Strukturschäden von Bauteilen aufgrund dynamisch mechanischer Belastung zur Prognose einer Restlebenszeit des Bauteils, bei dem ein Elektrokabel, das zumindest einen metallischen elektrischen Leiter aufweist, als ein Sensor oder Indikator verwendet wird, wobei das Elektrokabel an oder in einem zu überwachenden Bauteil angebracht oder angeordnet wird, sodass dynamisch mechanische Belastungen und damit Verformungen des Bauteils sich auf das Elektrokabel übertragen, umfassend folgende Schritte:
- Einleiten eines elektrischen Signals in Form eines höherfrequenten Wechselstroms in den
elektrischen Leiter des Elektrokabels derart, dass sich der Stromfluss durch den Skineffekt auf die Oberflächen des elektrischen Leiters konzentriert;
- Messung des Widerstandswertes des Leiters;
- Bestimmung der Oberflächenrauheit des elektrischen Leiters aus dem Widerstandswert;
- Prognose der Restlebenszeit des Bauteils anhand des Wertes der Oberflächenrauheit des elektrischen Leiters.

2. Überwachungsverfahren nach Anspruch 1,
**dadurch gekennzeichnet, dass** Veränderungen einer Materialoberfläche in Form von Erhebungen und Vertiefungen überwacht werden.

3. Überwachungsverfahren nach einem der vorangehenden Ansprüche, **dadurch gekennzeichnet, dass** im Fall von Kupfer als Sensorkabelmaterial mit Wechselströmen einer Frequenz zwischen 800 und 1000 MHz gemessen wird.

4. Überwachungsverfahren nach einem der vorangehenden Ansprüche, **dadurch gekennzeichnet, dass** eine Signalauswertung mittels einer Impedanzmessung abläuft.

## Claims

1. Monitoring method with respect to wear or structural damage of components due to dynamic mechanical loading for the prediction of a residual service life of the component, in which method an electrical cable having at least one metallic electrical conductor is used as a sensor or indicator, wherein the electrical cable is attached to or arranged in a component to be monitored, with the result that dynamic mechanical loads and thus deformations of the component are transferred to the electrical cable, comprising the following steps:
- introducing an electrical signal in the form of a relatively high frequency alternating current into the electrical conductor of the electrical cable in such a way that the current flow is concentrated on the surfaces of the electrical conductor through the skin effect;
- measuring the resistance value of the conductor;
- determining the surface roughness of the electrical conductor from the resistance value;
- predicting the remaining service life of the component based on the value of the surface roughness of the electrical conductor.

2. Monitoring method according to Claim 1,
**characterized in that** changes in a material surface in the form of elevations and depressions are monitored.

3. Monitoring method according to either of the preceding claims, **characterized in that**, in the case of copper as sensor cable material, alternating currents of a frequency between 800 and 1000 MHz are used for measuring.

4. Monitoring method according to one of the preceding claims, **characterized in that** a signal evaluation by means of an impedance measurement is carried out.

## Revendications

1. Procédé de surveillance en ce qui concerne l'usure ou les dommages structurels de composants causés par une charge mécanique dynamique, en vue de pronostiquer une durée de vie résiduelle du composant, dans lequel un câble électrique, comprenant au moins un conducteur électrique métallique, est utilisé comme capteur ou indicateur, le câble électrique étant monté ou disposé sur ou dans un composant à surveiller, de sorte que les charges mécaniques dynamiques et donc les déformations du composant se transmettent au câble électrique, comprenant les étapes suivantes consistant à :
- injecter un signal électrique sous la forme d'un courant alternatif à fréquence relativement élevée dans le conducteur électrique du câble électrique de telle sorte que le flux de courant se concentre sur les surfaces du conducteur électrique par effet de peau ;
- mesurer la valeur de la résistance du conducteur ;
- déterminer la rugosité de surface du conducteur électrique à partir de la valeur de résistance ;
- pronostiquer la durée de vie résiduelle du composant à partir de la valeur de la rugosité de surface du conducteur électrique.

2. Procédé de surveillance selon la revendication 1,
**caractérisé en ce que** des modifications d'une surface de matériau sous forme de bosses et de creux sont surveillées.

3. Procédé de surveillance selon l'une des revendications précédentes,
**caractérisé en ce que**, dans le cas du cuivre utilisé comme matériau de câble de détection, la mesure est effectuée avec des courants alternatifs d'une fréquence comprise entre 800 et 1000 MHz.

4. Procédé de surveillance selon l'une des revendications précédentes,
**caractérisé en ce qu'**une évaluation du signal se déroule au moyen d'une mesure d'impédance.
